# FASCICULE DE BREVET EUROPEEN

(11) **EP 2 777 927 B1**
(45) Date de publication et mention de la délivrance du brevet: **20.01.2016**
(21) Numéro de dépôt: 14159417.6
(22) Date de dépôt: 13.03.2014
(51) Int. Cl.: B32B 5/18, B32B 27/36, B29C 51/00, B65D 77/20, B65D 85/72

(54) **Complexe thermoformable en feuille, et barquette alimentaire realisée avec ce complexe**
Umformbares Gebilde in Blattform, und daraus hergestellte Schale für Lebensmittel
Thermoformable complex in sheet form, and food tray made from this complex

(30) Priorité: 14.03.2013 FR 1352258
(43) Date de publication de la demande: 17.09.2014
(73) Titulaire: C.G.L. Pack Service, 74370 Metz Tessy (FR)
(72) Inventeur: Rival, Jean-Luc, 74940 ANNECY LE VIEUX (FR)
(74) Mandataire: Cabinet Poncet

(56) Documents cités:
- WO-A1-2009/056473
- WO-A1-2012/069050
- FR-A1- 2 955 565
- JP-A- H09 156 005

## Description

La présente invention concerne un complexe thermoformable en feuille, une barquette alimentaire thermoformée conformée pour être obturée par un opercule, ainsi qu'une barquette alimentaire thermoformée obturée par un opercule.

Les barquettes alimentaires sont habituellement réalisées par thermoformage d'une feuille de polyéthylène téréphtalate (PET), et les opercules sont fixés sur un trottoir périphérique des barquettes alimentaires.

La fixation des opercules sur le trottoir périphérique des barquettes alimentaires est réalisée habituellement soit par collage soit par scellage thermique.

L'inconvénient du collage réside dans la présence de la colle, qui constitue un corps étranger induisant des problèmes de recyclage. Cependant son avantage est qu'il permet de fixer l'opercule sur la barquette alimentaire y compris lorsque la barquette alimentaire est souillée au niveau du trottoir périphérique sur lequel l'opercule doit être fixé. Une telle barquette alimentaire est notamment divulguée dans le document WO 2012/069050 A1.

L'avantage du scellage thermique réside dans le fait qu'il permet d'obtenir des barquettes alimentaires entièrement recyclables. Cependant son inconvénient majeur est que le scellage thermique n'est pas efficace lorsque la barquette alimentaire est souillée au niveau du trottoir périphérique sur lequel l'opercule doit être fixé. Le scellage thermique de l'opercule est nettement insuffisant lorsque le trottoir périphérique est souillé de graisses animales.

La qualité de la fixation de l'opercule sur le trottoir périphérique de la barquette alimentaire est essentielle pour la conservation des aliments contenus dans la barquette alimentaire.

L'opercule est lui-même généralement un film complexe multicouche de faible épaisseur (30 à 70 µm), comprenant des couches de structure pour la résistance mécanique, souvent à base de polyéthylène téréphtalate amorphe (APET), et des couches d'adhésion qui sont souvent des mélanges de polyéthylène téréphtalate (APET), de polyéthylène (PE) et parfois de polyéthylène téréphtalate glycolisé (PETG).

Le scellage thermique de l'opercule sur une barquette alimentaire en polyéthylène téréphtalate amorphe (APET) est habituellement réalisé à une température de 165 °C, une pression de 5 bars, pendant une durée de 1 seconde.

Ainsi, on sait déjà qu'en présence de graisses animales sur le trottoir périphérique des barquettes alimentaires, le scellage thermique d'un opercule sur une barquette alimentaire réalisée par thermoformage d'une feuille de polyéthylène téréphtalate amorphe (APET) n'est pas satisfaisant pour les professionnels de l'alimentation.

On a alors développé des barquettes alimentaires réalisées par thermoformage d'un complexe thermoformable tri-couche, comprenant une couche interne de polyéthylène téréphtalate amorphe expansé (XPET), et une première couche de surface et une seconde couche de surface toutes deux en polyéthylène téréphtalate amorphe (APET). Ce type de barquette alimentaire n'est toutefois pas satisfaisant pour les professionnels de l'alimentation.

On a alors développé des barquettes alimentaires réalisées par thermoformage d'un complexe thermoformable tri-couche, comprenant une couche interne de polyéthylène téréphtalate amorphe (APET), et une première couche de surface et une seconde couche de surface toutes deux en polyéthylène téréphtalate glycolisé (PETG). Ce type de barquette alimentaire n'est toujours pas satisfaisant pour les professionnels de l'alimentation.

Une solution pourrait être de modifier les conditions de scellage thermique en augmentant la température de scellage à 200 °C pendant un temps plus long (5 secondes par exemple). Toutefois, cette solution n'est pas rentable économiquement pour les professionnels de l'alimentation, car la cadence de fabrication est réduite, et la machine d'operculage est moins productive car sa fiabilité diminue.

Un premier problème proposé par la présente invention est de prévoir un complexe thermoformable en feuille qui permette de réaliser une barquette alimentaire comprenant un trottoir périphérique sur lequel un opercule peut être efficacement scellé thermiquement dans les conditions habituelles (température et temps) y compris lorsque le trottoir périphérique est souillé par de la graisse animale.

Pour atteindre ces buts ainsi que d'autres, l'invention propose un complexe thermoformable en feuille, comprenant :
- une couche interne de polyéthylène téréphtalate expansé (XPET), et
- une première couche de surface de polyéthylène téréphtalate glycolisé (PETG) adjacente à la couche interne de polyéthylène téréphtalate expansé (XPET).

Le polyéthylène téréphtalate expansé (XPET) contient de l'air, qui est un bon isolant thermique. Il est probable que la présence de l'air emprisonné a pour effet d'augmenter localement la température de scellage thermique à l'interface entre les deux couches. L'association du polyéthylène téréphtalate expansé (XPET) avec la couche adjacente de polyéthylène téréphtalate glycolisé (PETG) permet d'obtenir des résultats satisfaisants pour le scellage thermique.

De façon avantageuse, on peut prévoir que la première couche de surface de polyéthylène téréphtalate glycolisé (PETG) comprend entre 15 et 25 % de cyclohexanedimethanol (CHDM), avantageusement 20 %.

Le cyclohexanedimethanol (CHDM) permet d'éviter la cristallisation de la couche de surface à sceller et d'augmenter la température de formage des barquettes sans risque de mauvais scellage.

On peut avantageusement prévoir que la couche interne de polyéthylène téréphtalate expansé (XPET) surmonte une seconde couche de surface (CS2) de polyéthylène téréphtalate glycolisé (PETG).

Avantageusement, on peut prévoir que chaque couche de surface (CS1, CS2) présente une épaisseur d'environ 50 µm.

On peut avantageusement prévoir dans ce cas que le complexe est réalisé par co-extrusion avec utilisation de deux têtes d'extrusion indépendantes, à savoir une pour la couche interne, et une pour les deux couches de surface lorsqu'elles sont identiques.

En alternative, on peut avantageusement prévoir que la couche interne de polyéthylène téréphtalate expansé (XPET) surmonte une seconde couche de surface (CS2) de polyéthylène téréphtalate (PET).

Dans ce cas, le complexe peut être réalisé par co-extrusion avec utilisation de trois têtes d'extrusion indépendantes, à savoir une pour chaque couche.

Ce procédé de fabrication est facile à mettre en oeuvre et peu coûteux.

Un second problème proposé par l'invention est de concevoir une barquette alimentaire comprenant un trottoir périphérique sur lequel un opercule peut être scellé thermiquement dans les conditions habituelles (température et temps) y compris lorsque le trottoir périphérique est souillé par de la graisse animale.

Pour atteindre ces buts ainsi que d'autres, l'invention propose une barquette alimentaire réalisée par thermoformage à partir du complexe thermoformable en feuille selon le premier aspect de l'invention.

De façon avantageuse, on peut prévoir que la barquette alimentaire comprend un trottoir périphérique conformé pour recevoir et retenir un opercule par scellage thermique.

On peut avantageusement prévoir que la barquette alimentaire comprend un opercule scellé sur le trottoir périphérique.

D'autres objets, caractéristiques et avantages de la présente invention ressortiront de la description suivante de modes de réalisation particuliers, faite en relation avec les figures jointes, parmi lesquelles :
- la figure 1 est une vue schématique en coupe transversale à grande échelle d'une feuille d'un complexe thermoformable selon un premier mode de réalisation de l'invention ;
- la figure 2 est une vue schématique en coupe à grande échelle d'une feuille d'un complexe thermoformable selon un second mode de réalisation de l'invention ; et
- la figure 3 est une vue schématique en coupe d'une barquette alimentaire operculée selon un mode de réalisation de l'invention.

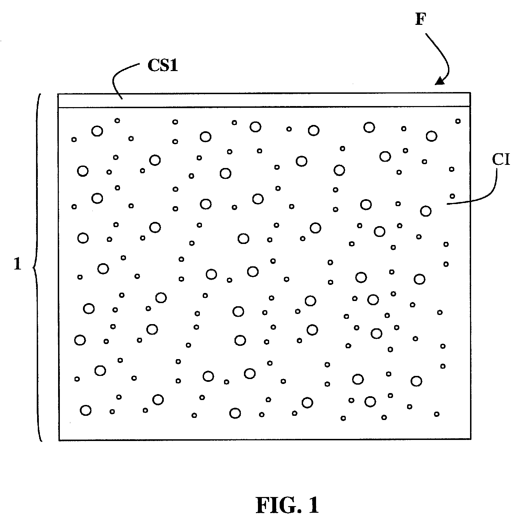

La figure 1 illustre un complexe thermoformable 1 en feuille F selon un premier mode de réalisation de l'invention. Ce complexe thermoformable 1 comprend une couche interne CI de polyéthylène téréphtalate expansé (XPET), et une première couche de surface CS1 de polyéthylène téréphtalate glycolisé (PETG) adjacente à la couche interne CI de polyéthylène téréphtalate expansé (XPET).

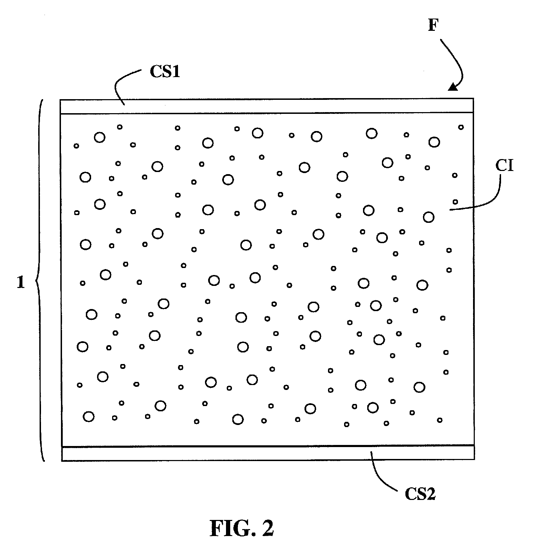

La figure 2 illustre un complexe thermoformable 1 en feuille F selon un second mode de réalisation de l'invention. Ce complexe thermoformable 1 comprend une couche interne CI de polyéthylène téréphtalate expansé (XPET), une première couche de surface CS1 de polyéthylène téréphtalate glycolisé (PETG) adjacente à la couche interne CI de polyéthylène téréphtalate expansé (XPET), et la couche interne CI de polyéthylène téréphtalate expansé (XPET) surmonte une seconde couche de surface CS2, en polyéthylène téréphtalate glycolisé (PETG) ou en polyéthylène téréphtalate (PET).

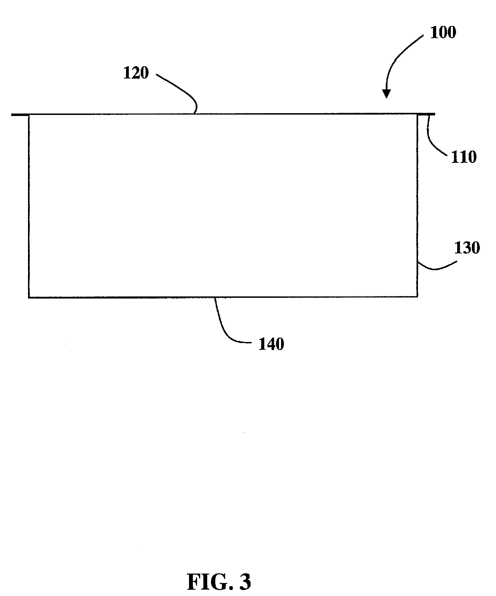

La figure 3 illustre une barquette alimentaire 100 operculée réalisée par thermoformage d'un complexe thermoformable selon le premier ou le second mode de réalisation de l'invention. Cette barquette alimentaire 100 comprend une paroi périphérique latérale 130 et un fond 140. Elle comprend en outre un trottoir périphérique 110 sur lequel un opercule 120 est fixé par scellage thermique.

L'efficacité du complexe thermoformable en feuille selon le second mode de réalisation de l'invention est démontrée par des essais techniques qui ont été effectués. Les résultats de ces essais techniques sont décrits et commentés ci-dessous.

Des barquettes alimentaires 100 de même forme mais de quatre compositions distinctes ont été testées :
- barquette A : barquette en APET (barquette de référence habituellement utilisée) ;
- barquette B : barquette multicouche APET/XPET/APET ;
- barquette C : barquette multicouche PETG/APET/PETG ;
- barquette D : barquette multicouche PETG/XPET/PETG (barquette selon l'invention).

Le trottoir périphérique 110 de chacune de ces barquettes 100 a été souillé par de l'huile de graisse de porc, à raison de 5 mm³/dm². Un opercule 120 du même type (fournisseur LINPAC) a été scellé thermiquement sur chacune des barquettes 100. Les scellages ont été effectués sur une scelleuse de barquette MECA 500, avec une température de 165 °C, une pression de 5 bars, pendant 1 seconde.

Ensuite, chacune de ces barquettes 100 a subi un test d'étanchéité dans une chambre d'immersion et mise sous vide, ce qui est le test utilisé habituellement pour tester la qualité d'un scellage thermique pour les barquettes alimentaires.

Pour chacune de ces barquettes alimentaires 100, le test a été effectué sans souillure et avec souillure.

Les résultats obtenus sont les suivants, exprimés en dépression limite supportée par la barquette operculée jusqu'au descellement de l'opercule :
- barquette A :
   - avec souillure : 300 mbar
   - sans souillure : 550 mbar
- barquette B :
   - avec souillure : 380 mbar
   - sans souillure : 650 mbar
- barquette C :
   - avec souillure : 370 mbar
   - sans souillure : 650 mbar
- barquette D :
   - avec souillure : 450 mbar
   - sans souillure : 660 mbar

Sachant que les professionnels de l'alimentaire estiment satisfaisant un scellage qui supporte une dépression d'au moins 400 mbar, les essais démontrent qu'en présence de graisse seule la barquette D de l'invention présente un scellage satisfaisant.

Ainsi, seule la structure particulière de la barquette D permet de garantir une qualité satisfaisante de scellage.

La présente invention n'est pas limitée aux modes de réalisation qui ont été explicitement décrits, mais elle en inclut les diverses variantes et généralisations contenues dans le domaine des revendications ci-après.

## Revendications

1. Complexe thermoformable (1) en feuille (F), **caractérisé en ce qu'**il comprend :
- une couche interne (CI) de polyéthylène téréphtalate expansé (XPET), et
- une première couche de surface (CS1) de polyéthylène téréphtalate glycolisé (PETG) adjacente à la couche interne (CI) de polyéthylène téréphtalate expansé (XPET).

2. Complexe thermoformable (1) en feuille (F) selon la revendication 1, **caractérisé en ce que** la première couche de surface (CS1) de polyéthylène téréphtalate glycolisé (PETG) comprend entre 15 et 25 % de cyclohexanedimethanol (CHDM), avantageusement 20 %.

3. Complexe thermoformable (1) en feuille (F) selon l'une des revendications 1 ou 2, **caractérisé en ce que** la couche interne (CI) de polyéthylène téréphtalate expansé (XPET) surmonte une seconde couche de surface (CS2) de polyéthylène téréphtalate glycolisé (PETG).

4. Complexe thermoformable (1) selon la revendication 3, **caractérisé en ce que** chaque couche de surface (CS1, CS2) présente une épaisseur d'environ 50 µm.

5. Complexe thermoformable (1) selon l'une des revendications 3 ou 4, **caractérisé en ce qu'**il est réalisé par co-extrusion avec utilisation de deux têtes d'extrusion indépendantes, à savoir une pour la couche interne (CI), et une pour les deux couches de surface (CS1, CS2).

6. Complexe thermoformable (1) selon l'une des revendications 1 ou 2, **caractérisé en ce que** la couche interne (CI) de polyéthylène téréphtalate expansé (XPET) surmonte une seconde couche de surface (CS2) de polyéthylène téréphtalate (PET).

7. Complexe thermoformable (1) selon la revendication 6, **caractérisé en ce qu'**il est réalisé par co-extrusion avec utilisation de trois têtes d'extrusion indépendantes, à savoir une pour chaque couche (CI, CS1, CS2).

8. Barquette alimentaire (100) **caractérisée en ce qu'**elle est réalisée par thermoformage à partir d'un complexe thermoformable (1) en feuille (F) selon l'une quelconque des revendications 1 à 7.

9. Barquette alimentaire (100) selon la revendication 8, **caractérisée en ce qu'**elle comprend un trottoir périphérique (110) conformé pour recevoir et retenir un opercule (120) par scellage thermique.

10. Barquette alimentaire (100) selon la revendication 9, **caractérisée en ce qu'**elle comprend un opercule (120) scellé sur le trottoir périphérique (110).

## Patentansprüche

1. Thermoverformbares Gebilde (1) aus Folie (F), **dadurch gekennzeichnet, dass** es umfasst:
- eine innere Schicht (CI) aus expandiertem Polyethylenterephthalat (XPET) sowie
- eine erste Deckschicht (CS1) aus mit Glykole modifiziertem Polyethylenterephthalat (PETG), die an der inneren Schicht (CI) aus expandiertem Polyethylenterephthalat (XPET) anliegt.

2. Thermoverformbares Gebilde (1) aus Folie (F) nach Anspruch 1, **dadurch gekennzeichnet, dass** die erste Deckschicht (CS1) aus mit Glykole modifiziertem Polyethylenterephthalat (PETG) zwischen 15 und 25%, vorzugsweise 20% Cyclohexandimethanol (CHDM) enthält.

3. Thermoverformbares Gebilde (1) aus Folie (F) nach einem der Ansprüche 1 oder 2, **dadurch gekennzeichnet, dass** die innere Schicht (CI) aus expandiertem Polyethylenterephthalat (XPET) über einer zweiten Deckschicht (CS2) aus mit Glykole modifiziertem Polyethylenterephthalat (PETG) liegt.

4. Thermoverformbares Gebilde (1) nach Anspruch 3, **dadurch gekennzeichnet, dass** jede Deckschicht (CS1, CS2) eine Stärke von etwa 50 µm hat.

5. Thermoverformbares Gebilde (1) nach einem der Ansprüche 3 oder 4, **dadurch gekennzeichnet, dass** es hergestellt ist durch Koextrusion unter Verwendung von zwei unabhängigen Extruderköpfen, nämlich einem für die innere Schicht (CI) und einem für die beiden Deckschichten (CS1, CS2).

6. Thermoverformbares Gebilde (1) nach einem der Ansprüche 1 oder 2, **dadurch gekennzeichnet, dass** die innere Schicht (CI) aus expandiertem Polyethylenterephthalat (XPET) über einer zweiten Deckschicht (CS2) aus Polyethylenterephthalat (PET) liegt.

7. Thermoverformbares Gebilde (1) nach Anspruch 6, **dadurch gekennzeichnet, dass** es hergestellt ist durch Koextrusion unter Verwendung von drei unabhängigen Extruderköpfen, nämlich jeweils einem für jede Schicht (CI, CS1, CS2).

8. Lebensmittelbehälter (100), **dadurch gekennzeichnet, dass** er durch Warmverformung aus einem thermoverformbaren Gebilde (1) aus Folie (F) nach einem der Ansprüche 1 bis 7 hergestellt ist.

9. Lebensmittelbehälter (100) nach Anspruch 8, **dadurch gekennzeichnet, dass** er einen umlaufenden Rand (110) hat, der so ausgebildet ist, dass er eine Deckfolie (120) mittels Heißversiegelung aufnehmen und halten kann.

10. Lebensmittelbehälter (100) nach Anspruch 9, **dadurch gekennzeichnet, dass** er eine auf den umlaufenden Rand (110) angeschweißte Deckfolie (120) hat.

## Claims

1. Thermoformable complex (1) in sheet (F), **characterized in that** it comprises:
- an inner layer (CI) of expanded polyethylene terephthalate (XPET), and
- a first surface layer (CS1) of glycolised polyethylene terephthalate (PETG) adjacent to the inner layer (CI) of expanded polyethylene terephthalate (XPET).

2. Thermoformable complex (1) in sheet (F) according to claim 1, **characterized in that** the first surface layer (CS1) of glycolised polyethylene terephthalate (PETG) comprises between 15 and 25% of cyclohexanedimethanol (CHDM), advantageously 20%.

3. Thermoformable complex (1) in sheet (F) according to one of claims 1 or 2, **characterized in that** the inner layer (CI) of expanded polyethylene terephthalate (XPET) gets over a second surface layer (CS2) of glycolised polyethylene terephthalate (PETG).

4. Thermoformable complex (1) according to claim 3, **characterized in that** each surface layer (CS1, CS2) has a thickness of about 50 µm.

5. Thermoformable complex (1) according to one of claims 3 or 4, **characterized in that** it is made by co-extrusion with use of two independent extrusion heads, namely one for the inner layer (CI), and one for both surface layers (CS1, CS2).

6. Thermoformable complex (1) according to one of claims 1 or 2, **characterized in that** the inner layer (CI) of expanded polyethylene terephthalate (XPET) gets over a second surface layer (CS2) of polyethylene terephthalate (PET).

7. Thermoformable complex (1) according to claim 6, **characterized in that** it is made by co-extrusion with use of three extrusion independent heads, namely one for each layer (CI, CS1, CS2).

8. Food tray (100) **characterized in that** it is made by thermoforming from a thermoformable complex (1) in sheet (F) according to any of claims 1 to 7.

9. Food tray (100) according to claim 8, **characterized in that** it comprises a peripheral rim (110) shaped to receive and retain a lidding film (120) by heat sealing.

10. Food tray (100) according to claim 9, **characterized in that** it comprises a lidding film (120) sealed to the peripheral rim (110).
